# FASCICULE DE BREVET EUROPEEN

(11) **EP 0 819 070 B1**
(45) Date de publication et mention de la délivrance du brevet: **16.12.1998**
(21) Numéro de dépôt: 96909197.4
(22) Date de dépôt: 26.03.1996
(51) Int. Cl.: B60R 13/01, B60N 3/04

(54) **PROCEDE DE REALISATION D'UN HABILLAGE INTERIEUR**
HERSTELLUNGSVERFAHREN EINER INNENBEKLEIDUNG
METHOD FOR MAKING AN INTERIOR COVERING

(30) Priorité: 03.04.1995 FR 9503900
(43) Date de publication de la demande: 21.01.1998
(73) Titulaire: IBP S.A.R.L., 91700 Fleury (FR)
(72) Inventeur: CHAMBIN, Patrice, F-91700 Fleury (FR)
(74) Mandataire: Lejet, Christian
(86) Numéro de dépôt international: FR9600445
(87) Numéro de publication internationale: WO9631368

(56) Documents cités:
- DE-A- 2 628 306
- FR-A- 2 068 304
- FR-A- 2 176 518
- GB-A- 2 120 168
- US-A- 1 590 648
- US-A- 1 747 323
- US-A- 3 406 407
- US-A- 4 505 508

## Description

La présente invention concerne un procédé de réalisation d'un habillage intérieur, notamment de la partie utilitaire d'un véhicule.

Le brevet US-A-1 590 648 relate un procédé de transfert conventionnel sur tissus. Une poudre de transfert est ajoutée à l'encre avant que celle-ci ne sèche. La poudre est constituée d'un mélange d'une poudre métallique fondant à température élevée et d'une poudre d'une laque fusible à basse température, de manière à obtenir un transfert à froid. L'encre comprend de la glycérine et un excès de matière colorante. Il ne s'agit donc pas d'une encre sublimable (passage de l'état solide à l'état gazeux).

Le document GB-A-2 120 168 concerne la décoration d'objets plats, par exemple de jouets. Un transfert à sec, à la manière d'une lithographie, est effectué sur une feuille de plastique qui va ramollir à chaud et pouvoir être découpée à chaud après impression au moyen d'une simple matrice. La feuille découpée est alors appliquée sur le jouet à titre de décoration. On constate donc qu'il s'agit ici d'un simple procédé d'impression pour assurer la décoration ultérieure d'objets.

On sait que les véhicules de type utilitaire sont généralement livrés avec la partie utilitaire non habillée, de manière que le véhicule puisse être personnalisé en fonction de sa destination. Un tel habillage, bien qu'il ne soit pas toujours fonctionnellement nécessaire, assure une protection certaine de la carrosserie interne du véhicule et de sa peinture, ainsi qu'une protection phonique importante.

A ce jour, l'habillage de la partie utilitaire d'un véhicule est un travail long et fastidieux que la présente invention cherche à simplifier. C'est également un travail de professionnel qui est coûteux, alors qu'il est souhaitable que ce travail puisse être effectué sans connaissance technique spéciale.

Selon l'invention, le procédé comprend les étapes suivantes:
- on réalise d'abord le plan à plat de chacune des zones à habiller ;
- à partir de ce plan, on dessine un gabarit de traçage sur une feuille appropriée au moyen d'une encre sublimable ;
- on dispose la face encrée de cette feuille portant le gabarit sur le matériau d'habillage ;
- on fixe ensuite la feuille portant le gabarit au matériau d'habillage ;
- on applique une source de chaleur sur la face non-encrée de la feuille portant le gabarit en regard des parties encrées en exerçant une légère pression, de manière à assurer un transfert de l'encre sublimable sur le matériau d'habillage ; et
- on découpe le matériau d'habillage en suivant les lignes encrées transférées.

Selon l'invention, le matériau d'habillage est choisi dans le groupe constitué par les contreplaqués de bois, les mélaminés et les combinaisons de ceux-ci.

L'invention sera mieux comprise, et d'autres buts, avantages et caractéristiques de celle-ci apparaîtront plus clairement à la lecture de la description qui suit d'un mode préféré de réalisation donné à titre non limitatif.

Le mode préféré décrit ici concerne l'habillage d'un véhicule utilitaire, mais peut également s'appliquer à l'habillage des coffres de véhicules de tourisme. Bien évidemment, l'habillage de tout autre élément est envisagé ici.

La première étape consiste à réaliser les plans à plat des zones à habiller. A partir de ces plans, on va pouvoir tracer un gabarit sur une feuille de papier, comme un patron en matière de vêtement. A cet effet, on utilise une encre sublimable présentant comme caractéristique de se vaporiser à une température élevée, par exemple supérieure à 100 °C. Ainsi, l'encre va pouvoir être facilement transférée ultérieurement sur le matériau d'habillage.

Une feuille portant un tel gabarit peut favorablement être réalisée de façon industrielle pour permettre aux utilisateurs non avertis de faire eux-même et de façon économique l'habillage de leurs propres véhicules, sans avoir à accomplir personnellement les deux premières étapes du procédé de l'invention.

Ensuite, on place la face encrée de la feuille portant le gabarit contre le matériau d'habillage auquel on fixe cette feuille par tout moyen approprié, par exemples punaises, papier collant, colle, pour éviter qu'elle puisse bouger par rapport au matériau d'habillage pendant l'étape suivante.

Ce matériau d'habillage est choisi dans le groupe constitué par les contreplaqués de bois, les mélaminés et les combinaisons de ceux-ci. En fonction du matériau utilisé, c'est à dire en fonction du fait que l'on a fixé la feuille portant le gabarit sur le recto ou sur le verso du matériau utilisé, le plan a été inversé ou non avant de dessiner le gabarit.

L'étape suivante consiste à appliquer une source de chaleur sur la face non-encrée de la feuille portant le gabarit en regard des parties encrées en exerçant une légère pression, de manière à assurer un transfert de l'encre sublimable sur le matériau d'habillage.

Pour ce faire, l'utilisation d'un simple fer à repasser domestique très chaud est tout à fait souhaitable et permet de simplifier grandement la mise en oeuvre de la présente invention. La chaleur vaporise l'encre sublimable, cette dernière venant se solidifier ensuite sur le matériau d'habillage.

L'utilisateur n'a plus alors qu'à découper le matériau d'habillage en suivant les lignes encrées sur celui-ci, pour obtenir une pièce d'habillage qu'il n'a plus qu'à poser et fixer dans le véhicule.

Le gabarit est, de préférence, réalisé sur une feuille de papier présentant au moins une face lisse et brillante sur laquelle est déposée l'encre sublimable. Ainsi, cette encre ne pénètre sensiblement pas dans le papier et reste totalement disponible pour le transfert sur le matériau d'habillage. Par contre, l'autre face de cette feuille de papier sur laquelle est appliquée la source de chaleur, est, de préférence, poreuse. En effet, la chaleur issue de la source de chaleur se transmet mieux et plus efficacement vers la face encrée du papier si cette face recevant la chaleur est poreuse.

Pour aider et guider l'utilisateur, il est préférable qu'un tracé du gabarit de traçage soit apparent sur la face non-encrée de la feuille. A cet effet, ce tracé est effectué au moyen d'une encre non-sublimable d'une couleur différente de celle de l'encre sublimable, pour bien différencier les faces de la feuille portant le gabarit. Dans un mode de réalisation, l'encre sublimable est noire, tandis que le tracé précité sera réalisé avec une encre verte ou rouge.

Bien que l'on ait décrit ce que l'on considère actuellement être le mode de réalisation préféré de la présente invention, il est évident que l'Homme de l'Art pourra y apporter différents changements et modifications sans sortir du cadre de la présente invention tel que défini ici.

## Revendications

1. Procédé de réalisation d'un habillage intérieur de la partie utilitaire d'un véhicule, comprenant les étapes suivantes :
- on réalise le plan à plat de chacune des zones à habiller ;
- à partir du dit plan, on dessine un gabarit de traçage sur une feuille appropriée au moyen d'une encre sublimable, la dite encre sublimable se vaporisant à une température supérieure à 100 °C environ,
- on dispose la face encrée de la dite feuille portant le dit gabarit sur le matériau d'habillage ;
- on fixe la dite feuille portant le gabarit au dit matériau d'habillage ;
- on applique une source de chaleur supérieure à 100° C sur la face non-encrée de la dite feuille portant le dit gabarit en regard des parties encrées en exerçant une légère pression, de manière à assurer un transfert de l'encre sublimable sur le dit matériau d'habillage ; et
- on découpe le dit matériau d'habillage en suivant les lignes encrées transférées.
**caractérisé en ce que**
le dit matériau d'habillage est choisi dans le groupe constitué par les contreplaqués de bois, les mélaminés et les combinaisons de ceux-ci.

2. Procédé de réalisation d'un habillage intérieur selon la revendication 1 caractérisé en ce que la dite source de chaleur est un fer à repasser.

3. Procédé de réalisation d'un habillage intérieur selon la revendication 1 ou 2 caractérisé en ce que le gabarit est dessiné sur une feuille de papier présentant au moins une face lisse et brillante sur laquelle est déposée l'encre sublimable, l'autre face de la dite feuille de papier portant le dit gabarit et sur laquelle est appliquée la source de chaleur étant poreuse.

4. Procédé de réalisation d'un habillage intérieur selon l'une quelconque des revendications précédentes caractérisé en ce que le dit plan est inversé avant de dessiner le dit gabarit.

5. Procédé de réalisation d'un habillage intérieur selon l'une quelconque des revendications précédentes caractérisé en ce qu'un tracé du dit gabarit de traçage est apparent sur la face non-encrée de la dite feuille portant le gabarit.

6. Procédé de réalisation d'un habillage intérieur selon la revendication 5 caractérisé en ce que le dit tracé est effectué avec une encre non-sublimable d'une couleur différente de celle de la dite encre sublimable.

## Claims

1. Process for producing an internal trim of the utility part of a vehicle, including the following stages:
- a flat plan of each of the regions to be trimmed is produced;
- from the said plan a tracing template is drawn on an appropriate sheet by means of a sublimable ink, the said sublimable ink being vaporized at a temperature higher than approximately 100EC,
- the inked face of the said sheet carrying the said trim is placed on the trim material;
- the said sheet carrying the template is secured to the said trim material;
- a source of heat higher than 100EC is applied to the uninked face of the said sheet carrying the said template facing the inked parts while applying a slight pressure, so as to ensure a transfer of the sublimable ink onto the said trim material; and
- the said trim material is cut by following the transferred inked lines,
characterized in that
the said trim material is chosen from the group consisting of plywood, melamine resins and combinations of these.

2. Process for producing an internal trim according to Claim 1, characterized in that the said source of heat is a smoothing iron.

3. Process for producing an internal trim according to Claim 1 or 2, characterized in that the template is drawn on a sheet of paper which has at least one smooth and glossy face on which the sublimable ink is deposited, the other face of the said sheet of paper carrying the said template and which the source of heat is applied being porous.

4. Process for producing an internal trim according to any one of the preceding claims, characterized in that the said plan is reversed before drawing the said template.

5. Process for producing an internal trim according to any one of the preceding claims, characterized in that an outline of the said tracing template is apparent on the uninked face of the said sheet carrying the template.

6. Process for producing an internal trim according to Claim 5, characterized in that the said outline is produced with a nonsublimable ink of a different colour from that of the said sublimable ink.

## Patentansprüche

1. Verfahren zur Herstellung einer Innenverkleidung der Nutzfläche eines Fahrzeugs, das folgende Schritte umfaßt:
- man stellt für jede der zu verkleidenden Flächen einen Grundriß her;
- ausgehend von diesem Grundriß zeichnet man mit einer sublimierbaren Druckfarbe, die bei einer Temperatur oberhalb etwa 100°C verdampft, auf ein geeignetes Blatt einen Umriß;
- das den Umriß aufweisende Blatt legt man mit der eingefärbten Seite auf das Verkleidungsmaterial;
- man befestigt das den Umriß aufweisende Blatt am Verkleidungsmaterial;
- man erhitzt das den Umriß aufweisende Blatt auf der nicht eingefärbten Seite an den den eingefärbten Teilen gegenüberliegenden Stellen mittels einer mehr als 100°C erzeugenden Heizquelle, indem man einen leichten Druck ausübt, wodurch ein Transfer der sublimierbaren Druckfarbe auf das Verkleidungsmaterial erfolgt; und
- man schneidet das Verkleidungsmaterial entlang der übertragenen eingefärbten Linien ab,
dadurch gekennzeichnet, daß das Verkleidungsmaterial ausgewählt ist aus der Gruppe bestehend aus Sperrhölzern, Melaminharzen und deren Kombinationen.

2. Verfahren zur Herstellung einer Innenverkleidung nach Anspruch 1, dadurch gekennzeichnet, daß es sich bei der Heizquelle um ein Bügeleisen handelt.

3. Verfahren zur Herstellung einer Innenverkleidung nach Anspruch 1 oder 2, dadurch gekennzeichnet, daß der Umriß auf ein Blatt Papier gezeichnet wird, das mindestens eine glatte und glänzende Seite aufweist, auf der die sublimierbare Druckfarbe aufgebracht wird, wobei die andere Seite dieses den Umriß aufweisenden Blatts Papier, die mittels der Heizquelle erhitzt wird, porös ist.

4. Verfahren zur Herstellung einer Innenverkleidung nach einem der vorhergehenden Ansprüche, dadurch gekennzeichnet, daß der Grundriß vor dem Einzeichnen des Umrisses umgedreht wird.

5. Verfahren zur Herstellung einer Innenverkleidung nach einem der vorhergehenden Ansprüche, dadurch gekennzeichnet, daß ein Verlauf des Umrisses auf der nichteingefärbten Seite des den Umriß aufweisenden Blatts sichtbar ist.

6. Verfahren zur Herstellung einer Innenverkleidung nach Anspruch 5, dadurch gekennzeichnet, daß das Einzeichnen des Verlaufs mit nichtsublimierbarer Druckfarbe vorgenommen wird, die eine andere Farbe aufweist als die sublimierbare Druckfarbe.
